# EUROPEAN PATENT SPECIFICATION

(11) **EP 2 509 256 B1**
(45) Date of publication and mention of the grant of the patent: **13.09.2017**
(21) Application number: 11761951.0
(22) Date of filing: 15.03.2011
(51) Int. Cl.: H04L 12/14, H04M 15/00, H04W 4/24, H04W 36/00

(54) **FLOW CHARGING METHOD AND APPARATUS**
DATENFLUSSABRECHNUNGSVERFAHREN UND -VORRICHTUNG
PROCÉDÉ ET APPAREIL DE FACTURATION DE FLUX

(30) Priority: 30.03.2010 CN 201010137684
(43) Date of publication of application: 10.10.2012
(73) Proprietor: Huawei Technologies Co., Ltd., Longgang District Shenzhen, Guangdong 518129 (CN)
(72) Inventor: KANG, Jiao, Shenzhen Guangdong 518129 (CN); SHAN, Mingjun, Shenzhen Guangdong 518129 (CN); CHAI, Xiaoqian, Shenzhen Guangdong 518129 (CN)
(74) Representative: Thun, Clemens
(86) International application number: PCT/CN2011/071789
(87) International publication number: WO 2011/120377

(56) References cited:
- CN-A- 101 047 515
- CN-A- 101 552 682
- US-A1- 2007 189 297
- US-A1- 2010 027 533
- "3rd Generation Partnership Project; Technical Specification Group Services and System Aspects; Local IP Access and Selected IP Traffic Offload (Release 10)", 3GPP STANDARD; 3GPP 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 22 March 2010 (2010-03-22), pages 1-37, XP050401981, [retrieved on 2010-03-22]
- "3rd Generation Partnership Project; Technical Specification Group Services and System Aspects; Overall high level functionality and architecture impacts of flow based charging; Stage 2 (Release 7)", 3GPP STANDARD; 3GPP TS 23.125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.0.0, 1 June 2007 (2007-06-01), pages 1-49, XP050362768,
- 'Add definitions, abbreviations and requirements for SIPTO charging to TS 32.251' 3GPP TSG-SA5 (TELECOM MANAGEMENT) MEETING SA5#70 05 March 2010, XIAMEN, PR. CHINA, pages 5 - 101013

## Description

### FIELD OF THE INVENTION

The present invention relates to the field of the third-generation mobile communications technologies, and in particular, to a method and an apparatus for flow based charging, and a flow based charging system.

### BACKGROUND OF THE INVENTION

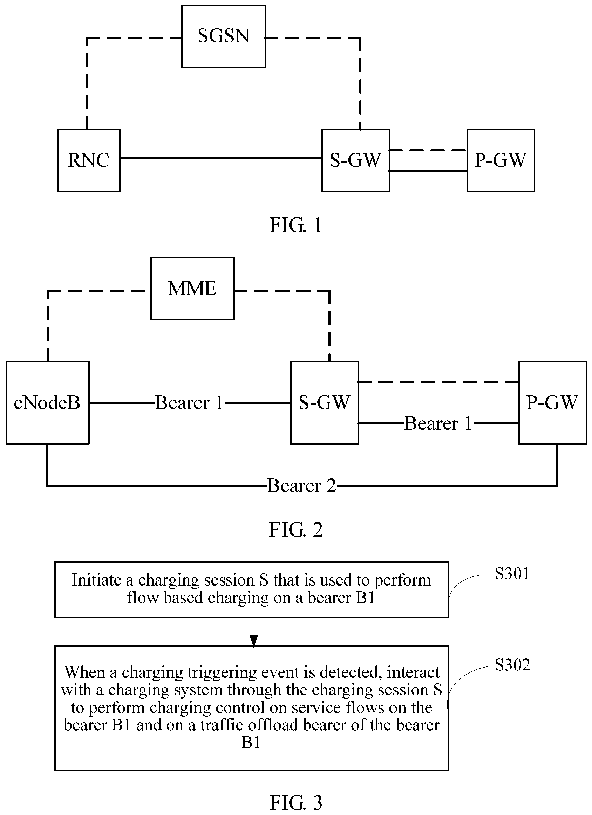

A direct tunnel (DT, Direct Tunnel) is a network enhancing function adopted for reducing the quantity of data links in a 3G network, lowering operation expenditure cost, and improving transmission efficiency. The DT enables user data traffic to bypass a control node and to be directly transmitted between a radio access network node (for example, a radio network controller) and a gateway node of a core network, which is shown as solid lines in FIG. 1. Because the quantity of nodes that need to be provided is reduced, with this type of connection architecture of the DT, it turns to be easier when network expansion is needed due to continuously growing traffic. Based on the DT connection architecture that is shown in FIG. 1, operators provide a selected IP traffic offload (SIPTO, Selected IP Traffic Offload) architecture. The SIPTO architecture is still a type of DT architecture in essence, and in this type of architecture, according to a configuration policy, a network element (for example, a P-GW) may selectively transmit a part of IP traffic in the network using a direct tunnel and still transmit the rest part of IP traffic using a normal path. A SIPTO policy may be configured at a user level, that is, that which part of the IP traffic is transmitted by using the direct tunnel and which part of the IP traffic is still transmitted by using the normal path are determined according to an access point name (APN, Access Point Name), a service type or a service flow direction (uplink or downlink). In this type of networking architecture, user service flows that are originally in the same bearer may be separately transmitted through multiple bearers (Bearer) in the same packet data network connection (PDN Connection, Packet Data Network Connection), or may be separately transmitted through a PDN Connection that is different from the original bearer. As shown in FIG. 2, the service flow may be transmitted from an eNodeB to a P-GW through a bearer 1 (that is, a path of eNodeB - S-GW - P-GW) and a bearer 2 (that is, a path of eNodeB - P-GW), where the bearer 1 and the bearer 2 may belong to the same PDN Connection or different PDN Connections.

In an existing flow based charging solution, the P-GW interacts with an online charging system (OCS, Online Charging System), and a charging session is used for each bearer to perform credit control on user data flows in the bearer.

The foregoing charging method in the prior art needs to generate a charging session (Session) for each bearer. However, in the SIPTO architecture, the user service flows which are originally of the same bearer may be separately transmitted through multiple bearers, and if a charging session is used for each bearer to perform the credit control, the OCS needs to maintain multiple charging sessions at the same time. In this way, too many resources of the OCS system are occupied. Moreover, when the user service flows which are originally of the same bearer are transmitted by using multiple bearers, different charging sessions are used in the prior art to perform credit control on the user service data flows which are originally of the same bearer, so that accumulative preference schemes cannot be implemented for the user service, and unified fee information cannot be provided for the user. Patent application US2007/0189297 (Xiaoqin Duan) discloses flow based charging methods and apparatuses, wherein a Diameter-based charging session can be established for multiple bearers.

"3rd Generation Partnership Project; Technical Specificaiton Group Services and System Aspects; Local IP Access and Seleted IP Traffic Offload (Release 10)" discloses a solution for Local IP access and Seleted IP traffic offload. "3rd Generation Partnership Project; Technical Specificaiton Group Services and System Aspects; Overall high level functionality and arthitecture impacts of flow based charging; Stage 2 (Release 7)" specifies the overall high level functionality and arthitecture impacts of Flow Based Charging. Both of them do not disclose the technical solution dislosed by the present application, which can implement flow based charging by performing creit control on service flows on multiple bearers.

### SUMMARY OF THE INVENTION

Embodiments of the present invention provide a method and an apparatus for flow based charging, and a flow based charging system, where the same charging session is used to perform credit control on service flows on multiple bearers, so as to implement flow based charging.

A flow based charging method comprising: initiating a charging session that is used to perform flow based charging on a bearer; and characterized in that, when a charging triggering event is detected, interacting with a charging system through the charging session to perform charging control on service flows on the bearer and on a traffic offload bearer of the bearer.

A flow based charging apparatus comprising a session initiating module, configured to initiate a charging session for performing flow based charging on a bearer; characterized in that it further comprises a charging control module, configured to, when a charging triggering event is detected, interact with a charging system through the charging session to perform charging control on service flows on the bearer and on a traffic offload bearer of the bearer.

In the embodiments of the present invention, a charging session S that is used to perform flow based charging on a bearer B1 is initiated, and when the charging triggering event is detected, interaction with the charging system is performed through the charging session S to perform the charging control on the service flows on the bearer B1 and on a traffic offload bearer of the bearer B1. Compared with the prior art, the present invention ensures that when user service flows which are originally of the same bearer are separately transmitted by using multiple traffic offload bearers, the charging control is still performed in a unified charging session, and therefore, it is convenient for the operators to adopt accumulative preference schemes and combined charging schemes on services, so as to implement proper charging on the user, and at the same time, unified service fee information may be provided for the user.

### BRIEF DESCRIPTION OF THE DRAWINGS

To describe the technical solutions in the embodiments of the present invention or in the prior art more clearly, the accompanying drawings required for describing the embodiments or the prior art are introduced briefly in the following. Apparently, the accompanying drawings in the following descriptions are merely some embodiments of the present invention, and persons of ordinary skill in the art may still derive other drawings based on these accompanying drawings without creative efforts.
FIG. 1 is a schematic diagram of a direct tunnel architecture according to the prior art;
FIG. 2 is a schematic diagram of a direct tunnel architecture of selected IP traffic offload according to the prior art;
FIG. 3 is a basic flow chart of a flow based charging method according to a first embodiment of the present invention;
FIG. 4 is a basic flow chart of a flow based charging method according to a second embodiment of the present invention;
FIG. 5-a is a schematic diagram of interaction between each node in a flow based charging method according to an embodiment of the present invention;

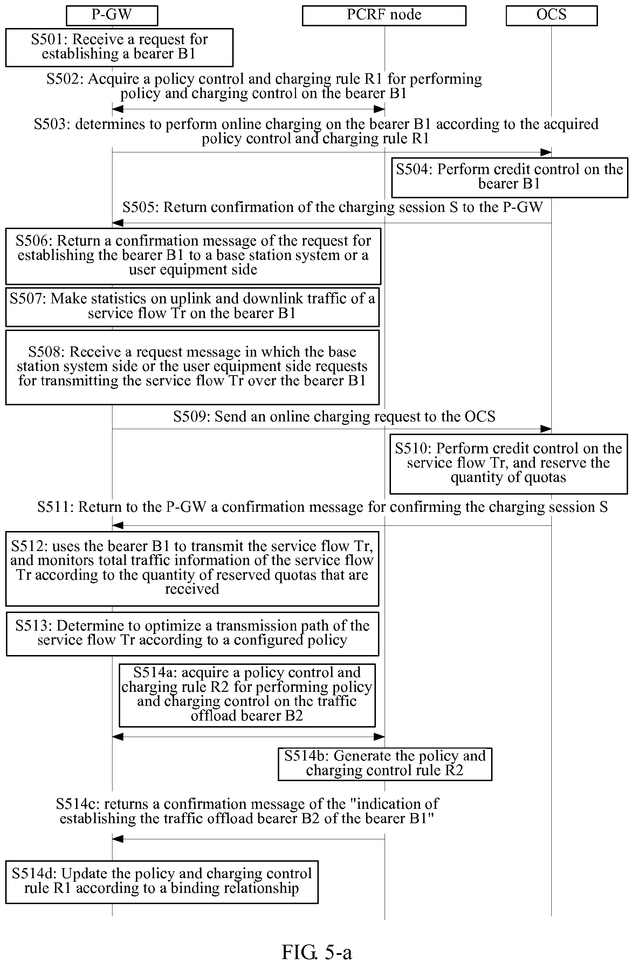

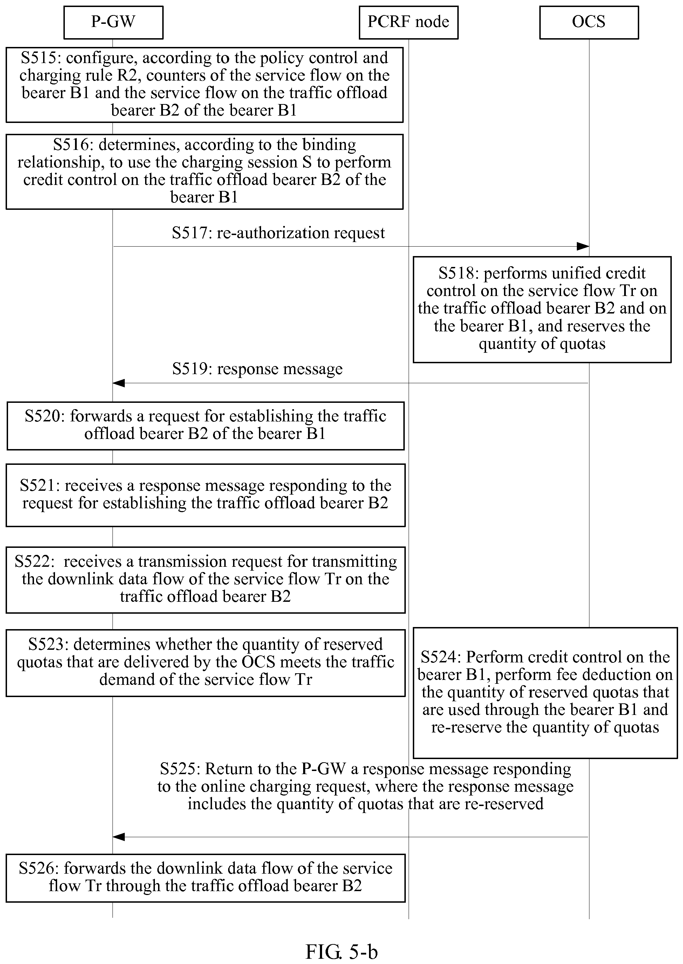

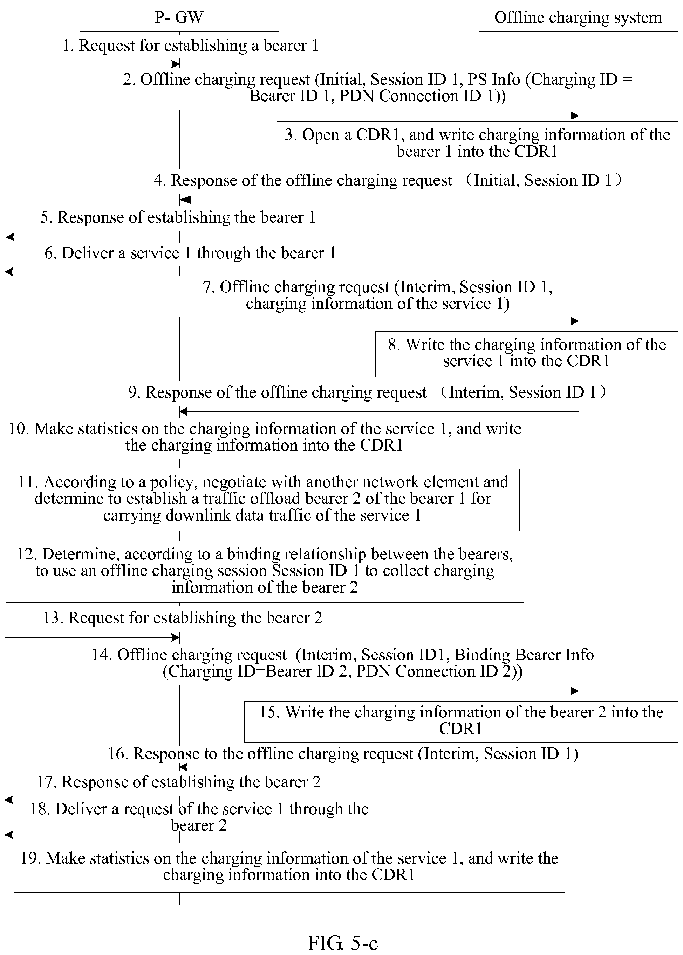

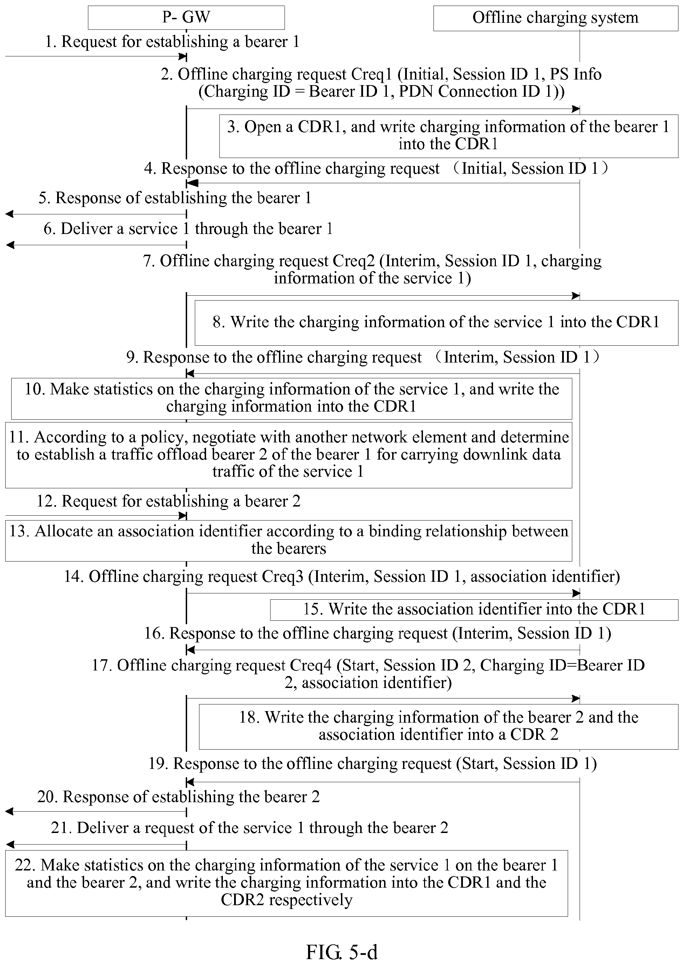

FIG. 5-b is a schematic diagram (subsequent to FIG. 5-a) of interaction between each node in a flow based charging method according to an embodiment of the present invention;
FIG. 5-c is a schematic diagram of interaction between each node when a flow based charging method is applied in an offline charging system according to an embodiment of the present invention;
FIG. 5-d is a schematic diagram of interaction between each node when a flow based charging method is applied in an offline charging system according to an embodiment of the present invention;

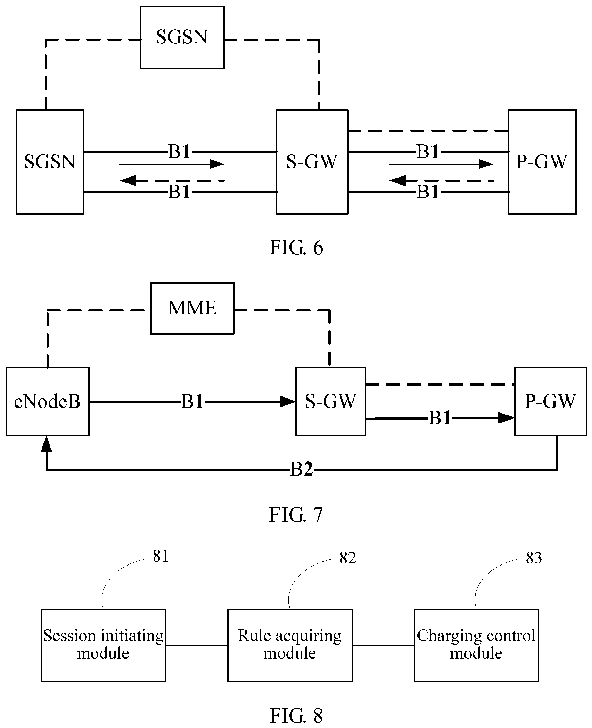

FIG. 6 is a schematic diagram of transmission of uplink and downlink data flows in a direct tunnel architecture according to an embodiment of the present invention;
FIG. 7 is a schematic diagram of transmission of uplink and downlink data flows in an optimized direct tunnel architecture according to an embodiment of the present invention;
FIG. 8 is a schematic diagram of a basic logical structure of a flow based charging apparatus according to a fourth embodiment of the present invention;

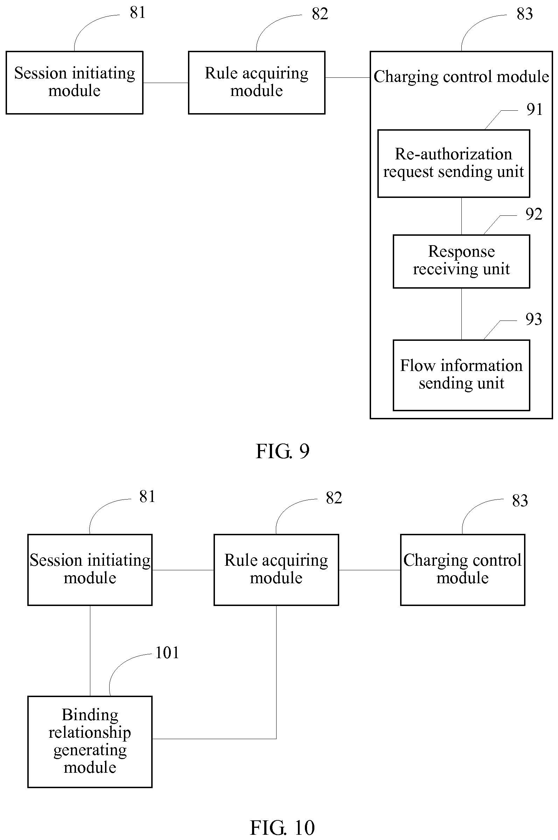

FIG. 9 is a schematic diagram of a basic logical structure of a flow based charging apparatus according to a fifth embodiment of the present invention;
FIG. 10 is a schematic diagram of a basic logical structure of a flow based charging apparatus according to a sixth embodiment of the present invention;

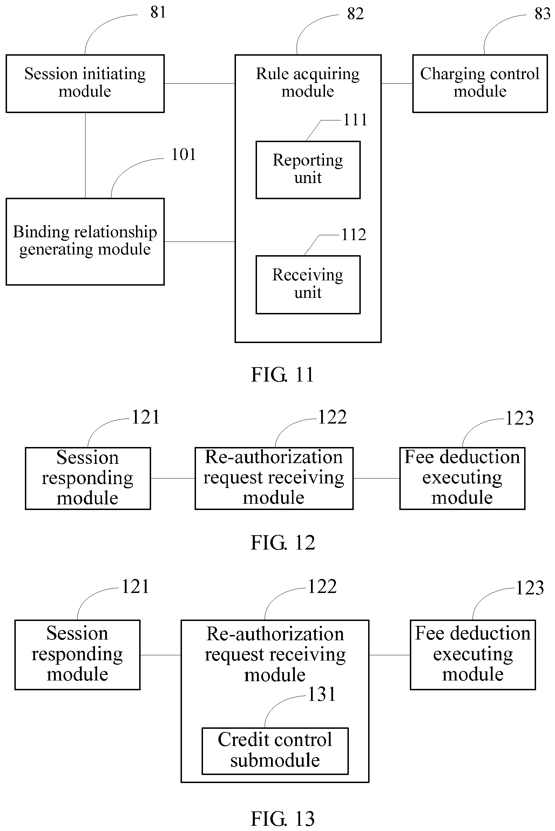

FIG. 11 is a schematic diagram of a basic logical structure of a flow based charging apparatus according to a seventh embodiment of the present invention;
FIG. 12 is a schematic diagram of a basic logical structure of an online charging system according to an eighth embodiment of the present invention;
FIG. 13 is a schematic diagram of a basic logical structure of an online charging system according to a ninth embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are only a part of the embodiments of the present invention rather than all of the embodiments. All other embodiments obtained by persons of ordinary skill in the art based on the embodiments of the present invention without creative efforts should fall within the protection scope of the present invention.

Referring to FIG. 3, a basic flow chart of a flow based charging method which is provided by a first embodiment of the present invention mainly includes:

Step S301: Initiate a charging session S that is used to perform flow based charging on a bearer B1.

In the embodiment of the present invention, the charging session S may be initiated by a packet data network gateway (P-GW, Packet data network GateWay) in a direct tunnel (Direct Tunnel) architecture, and a triggering condition of the charging session may be that the P-GW receives a request which is for establishing a bearer and which is sent by a network side. The P-GW determines to perform online charging on the bearer B1 according to a pre-configured charging policy or a dynamically acquired policy control and charging rule (PCC Rule, Policy Control and Charging Rule), where the online charging includes: the P-GW sends to an online charging system an initial online charging request that includes a charging session identifier Session ID in it; and the P-GW receives an initial online charging request response that is returned to the P-GW when the online charging system performs credit control on the bearer B1.

In this embodiment, that the P-GW performs online charging on the bearer B1 according to the pre-configured charging policy specifically refers to that the P-GW determines to perform the online charging on the bearer B1 according to a default charging policy that is pre-configured on the P-GW or charging characteristics (Charging Characteristics) that are transferred from the network side to the P-GW. That the P-GW dynamically acquires the PCC Rule to perform the online charging on the bearer B1 specifically refers to that the P-GW interacts with a policy and charging rules function (PCRF, Policy and Charging Rules Function) node to acquire a policy control and charging rule R1 of the bearer B1, and then according to the policy control and charging rule R1, determines to perform online charging on the bearer B1.

S302: When a charging triggering event is detected, interact with a charging system through the charging session S to perform charging control on service flows on the bearer B1 and on a traffic offload bearer of the bearer B1.

Specifically, for the charging system being the online charging system, in the embodiment of the present invention, interaction with the online charging system may be performed through the charging session S to perform unified credit control on the service flows on the bearer B1 and on the traffic offload bearer of the bearer B1.

As the foregoing description, in a SIPTO architecture, user service flows which are originally of the same bearer may be transmitted separately through multiple bearers (Bearer). For example, after the bearer B1 is established in step S301, another bearer B2 or multiple bearers may be further established, according to traffic conditions of the service flow on the bearer B1, to perform traffic offload bearing for the service flow on the bearer B1. Definitely, the bearer B2 or the multiple bearers may correspondingly be referred to as "traffic offload bearers" of the bearer B1. A new policy control and charging rule may be used to perform flow based charging on the bearer B1 and on a traffic offload bearer B2 of the bearer B1.

Similar to the default charging policy that is pre-configured on the P-GW of the bearer B1, if a traffic offload bearer B2 is established for the bearer B1, the default charging policy that is pre-configured on the P-GW may be used to perform online charging on the bearer B1 and on the traffic offload bearer B2.

Because a policy and charging enforcement function (PCEF, Policy and Charging Enforcement Function) is integrated on the P-GW, the P-GW may interact with a PCRF node through the integrated PCEF, and from the PCRF node, acquire a new policy control and charging rule R2 or acquire update information of the policy control and charging rule R1 to perform online charging on the bearer B1 and on the traffic offload bearer B2, where the acquisition process includes:
S3021: Report to the PCRF node an identifier of the bearer B1 and an identifier of the traffic offload bearer of the bearer B1.

S3022: Receive a policy control and charging rule R2 or update information of the policy control and charging rule R1 which are delivered by the PCRF node according to the identifier of the bearer B1 and the identifier of the traffic offload bearer of the bearer B1.

A bearer identifier (Bearer ID) or a bearer identifier plus a packet data network connection identifier (Bearer ID+PDN Connection ID) may be used to uniquely identify a bearer, and further, a binding relationship between the bearer and a traffic offload bearer of the bearer may be generated. For example, after the bearer B1 and the bearer B2 are established, Bearer ID 1 and Bearer ID 2 are used to respectively identify the bearer B1 and the bearer B2, and definitely, at this time, Bearer ID 1+PDN Connection ID 1 may be used to replace Bearer ID 1, and Bearer ID 2+PDN Connection ID 1 may be used to replace Bearer ID 2; the bearer B2 is designated as the traffic offload bearer of the bearer B1, and a bearer identifier is used to record this designation relationship in a certain form, that is, the binding relationship between the bearer B2 and the bearer B1 is established. In a subsequent step, it can be determined that the bearer B2 is the traffic offload bearer of the bearer B1 just by looking up these records.

In the same way, a charging session identifier (Session ID) may also be used to uniquely identify a charging session, and further, a binding relationship between the bearer, the traffic offload bearer of the bearer, and the charging session may also be generated. In an embodiment of the present invention, the binding relationship between the bearer B1 and the traffic offload bearer B2 and the binding relationship between the bearer B1, the traffic offload bearer B2 and the charging session S may be maintained by the P-GW, which clearly designates a traffic offload bearer relationship between bearers in the same PDN Connection or a traffic offload bearer relationship between bearers in different PDN Connections, and whether the charging sessions used by multiple bearers are the same. For example, the foregoing binding relationship may be shown in the following Table 1.

| Bearer | Traffic offload bearer | Charging session |
|---|---|---|
| Bearer ID 3 or Bearer ID 3+PDN Connection 3 | | Session ID 3 |
| Bearer ID 1' or Bearer ID 1'+PDN Connection 1 | | Session ID 1' |
| Bearer ID 1 or Bearer ID 1+PDN Connection 2 | Bearer ID2 or Bearer ID 2+PDN Connection 1 | Session ID 1 |

In the foregoing Table 1, the bearer 3 does not have a traffic offload bearer, a charging session used by the bearer 3 is the charging session 3 (represented by Session ID 3), and the bearer 3 may be represented by Bearer ID 3 or Bearer ID 3+PDN Connection 3; the bearer 1' also does not have a traffic offload bearer, a charging session used by the bearer 1' is the charging session 1' (represented by Session ID 1'), and the bearer 1' may be represented by Bearer ID 1' or Bearer ID 1'+PDN Connection 1; and the bearer 1 (represented by Bearer ID 1 or Bearer ID 1+PDN Connection 2) has the traffic offload bearer 2 (represented by Bearer ID 2 or Bearer ID 2+PDN Connection 1), the bearer 2 and the bearer 1 both use the charging session 1 (represented by Session ID 1) to perform flow based charging for service flows on them, and definitely, the bearer 1 may be represented by Bearer ID 1 or Bearer ID 1+PDN Connection 2, and the bearer 2 may be represented by Bearer ID 2 or Bearer ID 2+PDN Connection 1. The charging session 1 may be a charging session that is initiated when the bearer 1 is established.

According to a binding relationship principle shown in the foregoing Table 1, in the embodiment of the present invention, the binding relationship between the bearer B1 and the traffic offload bearer B2 and the binding relationship between the bearer B1, the traffic offload bearer B2 and the charging session S (represented by Session ID) may be shown as Table 2, where the bearer B1 may be represented by B1 ID 1 or B1 ID 1+PDN Connection 2, and the bearer B2 may be represented by B2 ID 2 or B2 ID2+PDN Connection 1.

| Bearer | Traffic offload bearer | Charging session |
|---|---|---|
| B1 ID 1 or B1 ID 1+PDN Connection 2 | B2 ID2 or B2 ID2+PDN Connection 1 | Session ID |

Therefore, in the foregoing S3021, reporting a binding relationship between the multiple bearers to the PCRF node may specifically is reporting to the PCRF node the identifier B2 ID 2 of the traffic offload bearer B2, binding information Binding Bearer=B1 ID 1 that the traffic offload bearer B2 is bound to the bearer B1, and bearer usage information Bearer Usage=SIPTO, or reporting to the PCRF the identifier B1 ID 1 of the bearer B1 and information Binding Bearer=B2 ID 2 that the bearer B1 is bound to the traffic offload bearer B2, and updating, by the PCRF, the policy control and charging rule R1 according to the binding relationship between B1 and B2.

The policy control and charging rule R2 or the updated policy control and charging rule R1 includes a template for performing traffic detection for the service flow on the bearer B1 and a template for performing traffic detection for the service flow on the traffic offload bearer B2, and may also include packet routing information of the service flow on the bearer B1 and of the service flow on the traffic offload bearer B2, where the routing information is which bearer is used for routing. The P-GW receives the policy control and charging rule R2 or the updated policy control and charging rule R1, and then uses the R2 or the updated R1 for packet routing and policy and charging control of the bearer B1 and the traffic offload bearer B2.

The P-GW configures, according to a policy control and charging rule R2, a counter for the service flow on the bearer B1 and a counter for the service flow on the traffic offload bearer B2, where the counters are respectively used to make statistics on the traffic of the service flows on the bearer B1 and on the traffic offload bearer B2, or, the P-GW configures, according to the updated policy control and charging rule R1, a counter for the service flow on the bearer B1 and a counter for the service flow on the traffic offload bearer B2, where the counters are respectively used to make statistics on the traffic of the service flows on the bearer B1 and on the traffic offload bearer B2.

In the embodiment of the present invention, the charging triggering event includes a charging re-authorization triggering event and a charging termination triggering event, which may be configured by the user and which may also be delivered by the OCS. The charging triggering event may be a new-establishment request of any one of the traffic offload bearers of the bearer B1, an update request of any one of the bearers in the bearer B1 and the traffic offload bearers of the bearer B1, a service data flow request of any one of the bearers in the bearer B1 and the traffic offload bearers of the bearer B1, or a termination request of some of the bearer B1 and the traffic offload bearers of the bearer B1, where any one of the traffic offload bearers may be the traffic offload bearer B2; and the charging termination triggering event may be a termination request of a bearer that is terminated at last among the bearer B1 and the traffic offload bearers of the bearer B1, that is, a termination request of a bearer that is terminated at last after n-1 bearers among n bearers are terminated, where n is a natural number which is greater than or equal to 2, and here the n bearers include the bearer B1 and the traffic offload bearers of the bearer B1, the n-1 bearers include the bearer B1 and the traffic offload bearers of the bearer B1, and the bearer that is terminated at last may be the bearer B1 or any one of the traffic offload bearers of the bearer B1. For example, 5 bearers exist, where 4 bearers are traffic offload bearers of the other bearer B. When the 4 traffic offload bearers or the bearer B and any three of the traffic offload bearers is terminated, when the remaining bearer is terminated, a termination request of the remaining bearer is the charging termination triggering event, where the remaining bearer may be the bearer B or a traffic offload bearer of the bearer B.

When a charging termination triggering event is detected, an online charging termination request is sent through the charging session S; and when the P-GW detects a charging re-authorization triggering event, a re-authorization request of the charging session S is sent to request the charging system to perform credit control on the traffic offload bearer B2, where the re-authorization request includes information of the quantity of reserved quotas that are used on the bearer B1 and charging information on the traffic offload bearer of the bearer B1, where the charging information includes a charging identifier (Charging ID) of the traffic offload bearer of the bearer B1, and the charging identifier is an identifier (Bearer ID2) of the traffic offload bearer of the bearer B1 or a packet data connection identifier of the traffic offload bearer of the bearer B1, and the charging information may also be rating group information and/or a service identifier. In specific implementation, a parameter Bingding-Bearer-Information may be added to an existing online charging interface message, and is used to record information of the traffic offload bearer which mainly includes a Charging ID, a PDN Connection ID, and other relevant information of the bearer such as a node identifier and a bearer access network type. If the bearer B1 has multiple traffic offload bearers, the parameter may occur multiple times. An example of the parameter is as follows:

```
       Bingding-Bearer-Information :: = <AVP Header: xxxx>
                             [Charging-Id]
                             [PDN-Connection-ID]
                       ···
```

If new rating group information is added to the traffic offload bearer, corresponding information may be carried by using an existing charging parameter MSCC (Multiple-Service-Credit-Control).

It can be known from Table 2 that, the charging session S is initiated when the bearer B1 is established, and is bound to the bearer B1 and the traffic offload bearer B2, and therefore, different from the prior art, in the embodiment of the present invention, when the traffic offload bearer B2 needs to be established, a re-authorization request of the charging session is sent still through the same charging session S, instead of initiating another new charging session.

If the charging system, for example, the OCS, accepts the re-authorization request of the charging session S, the charging system returns a response message of the re-authorization request. The P-GW receives the response message of the re-authorization request, where the response message includes the quantity of reserved quotas that are reserved for the service flows on the bearer B1 and on the traffic offload bearer of the bearer B1.

It should be noted that, after the P-GW receives the quantity of the reserved quotas that are delivered by the charging system, when receiving a certain service flow, the P-GW may further determine whether the quantity of the reserved quotas of the service flows on the bearer B1 and on the traffic offload bearer of the bearer B1 meets an amount of service usage of the service flow. If the P-GW determines that no effective quantity of reserved quotas exists, for example, the quantity of reserved quotas of a certain service flow is less than the amount of service usage of the service flow, and then the P-GW sends an online charging request to the charging system, where the online charging request includes an amount of service usage on the bearer B1 and on the traffic offload bearer B2 of the bearer B1. The charging system performs fee deduction on the quantity of reserved quotas that are used of the bearer B1 and re-reserves the quantity of new reserved quotas to deliver, and the P-GW receives the quantity of the reserved quotas that are delivered by the charging system.

Because the charging system reserves a definite quantity of reserved quotas for the service flows on the bearer B1 and on the traffic offload bearer B2 of the bearer B1, the P-GW may send to a base station system side or a user equipment side a request for establishing the traffic offload bearer B2 of the bearer B1. After the traffic offload bearer B2 is established, some of the service flows that are originally transmitted on the bearer B1 may be shifted to the traffic offload bearer B2 to transmit; and accordingly, the P-GW makes statistics on traffic on the bearer B1 and on the traffic offload bearer B2 of the bearer B1, where the statistic method may be performed by adopting a traffic counter which is obtained from the policy control and charging rule R2, and then sends the statistical traffic information to the charging system, so that the charging system performs fee deduction according to the traffic.

It can be known from the foregoing embodiment of the present invention that, because the charging control for the service flows of the user is performed in a unified charging session, it is convenient for the operators to adopt accumulative preference schemes and combined charging schemes on services, so as to implement proper charging on the user; and the unified charging session is used to perform charging control on the same service flow of the same user, so that unified service fee information may also be provided for the user.

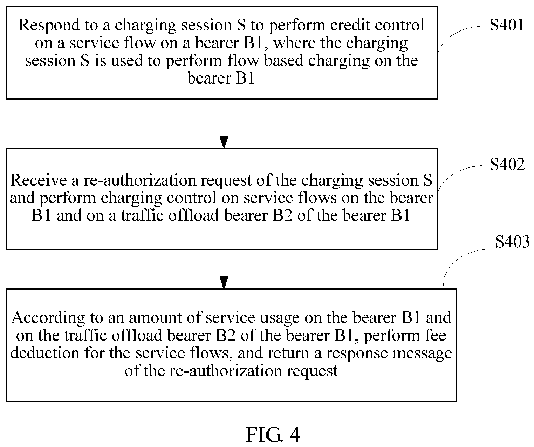

Referring to FIG. 4, a schematic basic flow chart of a flow based charging method is provided in a second embodiment of the present invention. In this embodiment, an executive subject of the steps may be a charging system, for example, an offline charging system or an OCS in a DT architecture, and the performed steps mainly includes:
Step S401: Respond to a charging session S to perform credit control on a service flow on a bearer B1, where the charging session S is used to perform flow based charging on the bearer B1.

Step S402: Receive a re-authorization request of the charging session S and perform charging control on service flows on the bearer B1 and on a traffic offload bearer B2 of the bearer B1.

For example, for an online charging system, the re-authorization request of the charging session S may be received and unified credit control may be performed on the service flows on the bearer B1 and on the traffic offload bearer of the bearer B1.

Here the re-authorization request includes information of the quantity of reserved quotas that are used on the bearer B1 and charging information on the traffic offload bearer B2 of the bearer B1, where the charging information may be one or any random combination of an identifier of the traffic offload bearer of the bearer B1, a packet data identifier of the traffic offload bearer of the bearer B1, rating group information and a service identifier.

Step S403: According to an amount of service usage on the bearer B1 and on the traffic offload bearer B2 of the bearer B1, perform fee deduction for the service flows, and return a response message of the re-authorization request.

In this embodiment, the response message includes the quantity of reserved quotas that are reserved for the service flows on the bearer B1 and on the traffic offload bearer B2 of the bearer B1.

When a P-GW sends an actual amount of service usage on the bearer B1 and on the traffic offload bearer B2 of the bearer B1 to the charging system, the charging system re-delivers a quantity of reserved quotas according to the quantity of the reserved quotas that are used on the bearer B1 and on the traffic offload bearer B2 of the bearer B1.

It can be known from the foregoing embodiment that, because the P-GW and/or the OCS uses the same charging session to perform credit control on multiple bearers, by adopting the present invention, the number of the charging sessions can be reduced, and OCS resources can be effectively utilized, so that the processing capability of the OCS can be improved objectively.

In order to illustrate the present invention more clearly, taking an online charging system as an example, FIG. 5-a and FIG. 5-b show schematic diagrams of interaction between each node in a flow based charging method according to the embodiment of the present invention. The embodiment as shown in FIG. 5-a and FIG. 5-b may be applied to the DT architecture as shown in FIG. 6. In this architecture, uplink data transported from an eNodeB to an S-GW and the P-GW and downlink data transported from the P-GW to the S-GW and the eNodeB are both transmitted on a bearer 1 such as B1, where transmission of the uplink data is indicated by a solid arrow, and transmission of the downlink data is indicated by a dashed arrow. If the amount of the downlink data is excessively large in the whole network, during the charging session process, the P-GW may transmit the downlink data by using a simplified path according to a configured policy control and charging rule, that is, as shown in FIG. 7, the P-GW negotiates with the eNodeB to establish another bearer 2 such as B2, so as to bypass an S-GW node and directly transmit to the eNodeB through the bearer 2 the downlink data flow that is originally transmitted on the bearer 1. Interaction of relevant nodes when the first embodiment and the second embodiment of the present invention are applied to an architecture which is shown in FIG. 7 is described in detail in the following with reference to FIG. 5-a and FIG. 5-b.

S501: The P-GW receives a request for establishing a bearer B1.

S502: The P-GW interacts with a PCRF node to acquire a policy control and charging rule R1 for performing policy and charging control on the bearer B1.

Specifically, the P-GW may send an indication of establishing the bearer B1 (Indication of IP-CAN Bearer establishment) to the PCRF, where the indication includes an IP address of a user equipment, a PDN connection identifier, and so on; and if the PCRF node agrees to establish the bearer B1, the PCRF node returns a confirmation message to the P-GW.

Optionally, a charging policy may also be configured on the P-GW in advance, so that the P-GW may locally acquire the pre-configured charging policy to perform policy and charging control on the bearer B1.

S503: The P-GW determines to perform online charging on the bearer B1 according to the acquired policy control and charging rule R1.

Once the P-GW determines to perform online charging on the bearer B1, the P-GW initiates the charging session S, that is, the P-GW sends an online charging request to the online charging system (OCS, Online Charging System), where the online charging request includes an identifier of the charging session S.

S504: The OCS performs credit control on the bearer B1.

S505: The OCS returns confirmation of the charging session S to the P-GW, where the charging session S includes the online charging request.

S506: The P-GW returns the confirmation message of the request for establishing the bearer B1 to a base station system side or a user equipment side.

S507: The P-GW sets a counter of a service flow Tr on the bearer B1 according to a flow detection template in the policy control and charging rule R1, so as to make statistics on uplink and downlink traffic of the service flow Tr on the bearer B1.

The P-GW may also set a counter of the service flow Tr on the bearer B1 according to a flow detection template in the pre-configured charging policy, so as to make statistics on uplink and downlink traffic of the service flow Tr on the bearer B1.

S508: The P-GW receives a request message in which the base station system side or the user equipment side requests for transmitting the service flow Tr over the bearer B1.

S509: The P-GW sends the online charging request to the OCS, where the online charging request includes charging information of the service flow Tr.

S510: The OCS performs credit control on the service flow Tr, and reserves the quantity of quotas.

S511: The OCS returns to the P-GW the confirmation message for confirming the charging session S, where the confirmation message includes the quantity of quotas that are reserved when the OCS performs credit control on the service flow Tr.

S512: The P-GW uses the bearer B1 to transmit the service flow Tr, and monitors total traffic information of the service flow Tr according to the quantity of reserved quotas that are received.

S513: The P-GW determines to optimize a transmission path of the service flow Tr according to the configured policy.

As in the foregoing description, the uplink and downlink traffic of the service flow in the direct tunnel may be unequal, and here being unequal may be that the downlink traffic is far greater than the uplink traffic, and therefore, the P-GW may determine, according to the configured policy, to optimize the transmission path of the service flow Tr, for example, to transmit the downlink service flow over the traffic offload bearer B2, specifically, which may includes:

S514a: The P-GW interacts with the PCRF node to acquire a policy control and charging rule R2 for performing policy and charging control on the traffic offload bearer B2.

The policy control and charging rule R2 may be generated and delivered by the PCRF node according to an indication after the P-GW reports to the PCRF node the indication of establishing the traffic offload bearer B2. In this embodiment, the indication of establishing the traffic offload bearer B2 includes a binding relationship between the bearer B1 and the traffic offload bearer B2 of the bearer B1, where the generation of the binding relationship is described in detail in the foregoing embodiment, which is not repeatedly described here again.

S514b: If the P-GW acquires the policy control and charging rule R2 through interaction with the PCRF node, the PCRF node generates the policy control and charging rule R2 according to a reported traffic offload relationship, for example, the identifier of the traffic offload bearer B2 of the bearer B1, the bearer usage (Bearer Usage=SIPTO), and the information (Binding Bearer=Bearer ID 1) of the bearer B1 that is bound to the traffic offload bearer B2, where the policy control and charging rule R2 includes an uplink data flow detection template (set according to the information of the bearer B1) that is used for detecting an uplink data flow of the service flow Tr and a downlink data flow detection template that is used for detecting a downlink data flow of the service flow Tr. The uplink data flow detection template may be set according to the information of the bearer B1, and the downlink data flow detection template may be set according to the information of the traffic offload bearer B2 of the bearer B1.

The policy control and charging rule R2 also includes packet routing information of the uplink data flow and the downlink data flow of the service flow Tr, that is, indicating that the uplink data flow is forwarded through the bearer B1 and the downlink data flow is forwarded through the traffic offload bearer B2.

S514c: The PCRF node returns a confirmation message of the "indication of establishing the traffic offload bearer B2 of the bearer B1", where the confirmation message includes the policy control and charging rule R2.

S514d: The P-GW updates the policy control and charging rule R1 according to the binding relationship, that is, the policy control and charging rule R2 is used for both packet routing and charging control at the same time for the service flow on the bearer B1 and the service flow on the traffic offload bearer B2 of the bearer B1.

S515: The P-GW configures, according to the policy control and charging rule R2, counters of the service flow on the bearer B1 and the service flow on the traffic offload bearer B2 of the bearer B1, where the counters include an uplink data traffic counter and a downlink data traffic counter, which are respectively used to make statistics on the traffic of the uplink service flow on the bearer B1 and the downlink service flow on the traffic offload bearer B2.

S516: The P-GW determines, according to the binding relationship, to use the charging session S to perform credit control on the traffic offload bearer B2 of the bearer B1.

S517: The P-GW sends the re-authorization request of the charging session S to the OCS, where the re-authorization request includes information of the quantity of reserved quotas that are used on the bearer B1 and charging information on the traffic offload bearer of the bearer B1.

Because binding relationships exist between the bearer B1 and the traffic offload bearer B2 and between the bearer B1, the traffic offload bearer B2 and the charging session S, different from the prior art, when the P-GW and the OCS need to perform charging on the traffic offload bearer B2, a new charging session does not need to be initiated, and it is only necessary to send the re-authorization request to the OCS through the charging session S that is initiated when the bearer B1 is established, so as to request the OCS to perform unified credit control on the traffic offload bearer B2. The charging triggering event of sending the re-authorization request is described in the foregoing embodiment, which is not repeatedly described here again.

In this embodiment, the unified credit control is performed on the bearer B1 and on the traffic offload bearer B2 through the same charging session S, the number of the charging sessions is reduced, and the OCS resources are effectively utilized, so that the processing capability of the OCS is improved objectively.

S518: The OCS performs unified credit control on the service flow Tr on the traffic offload bearer B2 and on the bearer B1, and reserves the quantity of quotas.

S519: The OCS returns a response message responding to the re-authorization request, where the response message includes the quantity of reserved quotas for the service flow Tr.

S520: The P-GW forwards a request for establishing the traffic offload bearer B2 of the bearer B1.

S521: The P-GW receives a response message responding to the request for establishing the traffic offload bearer B2.

S522: The P-GW receives a transmission request for transmitting the downlink data flow of the service flow Tr on the traffic offload bearer B2.

S523: The P-GW determines whether the quantity of reserved quotas that are delivered by the OCS meets the traffic demand of the service flow Tr.

If the P-GW determines that the quantity of reserved quotas that are delivered by the OCS cannot meet the traffic of the service flow Tr, the P-GW sends the online charging request to the OCS, where the online charging request includes traffic of the service flow Tr transmitted on the bearer B1 and on another bearer B2.

S524: The OCS performs credit control on the bearer B1, performs fee deduction on the quantity of the reserved quotas that are used through the bearer B1, and re-reserves the quantity of quotas.

S525: The OCS returns to the P-GW the response message responding to the online charging request, where the response message includes the quantity of quotas that are re-reserved.

S526: The P-GW forwards the downlink data flow of the service flow Tr through the traffic offload bearer B2.

Apparently, the P-GW uses the downlink data traffic counter that is configured according to the policy control and charging rule R2 to make statistics on traffic of the downlink data flow of the service flow Tr on the traffic offload bearer B2.

It can be known from the foregoing embodiment of the present invention that, because charging control is performed on the service flows of the user in the unified charging session, it is convenient for the operators to adopt accumulative preference schemes and combined charging schemes on services, so as to implement proper charging on the user; and the unified charging session is used to perform charging control on the same service flow of the same user, so that unified service fee information may also be provided for the user.

The flow based charging method provided in the embodiment of the present invention is not limited to the online charging system of the foregoing embodiment, and may also be applied to an offline charging system, that is, interaction with the offline charging system is performed through the charging session S to perform charging control on the service flows on a bearer and on a traffic offload bearer of the bearer, which includes: writing charging information of a service flow into a first charging data record, where the first charging data record corresponds to a bearer B1; allocating an association identifier according to a binding relationship between the bearer B1 and a traffic offload bearer of the bearer B1, where the association identifier is used to associate the first charging data record and a second charging data record which is corresponding to the traffic offload bearer; and making statistics on charging information of a service flow on the bearer B1 and on charging information of a service flow on the traffic offload bearer of the bearer B1 and writing the charging information into the first charging data record and the second charging data record respectively. The flow is shown in FIG. 5-c, and specifically is: after receiving an offline charging request, the offline charging system writes charging information of a service such as a service 1, and charging information of the bearer B1 into a charging data record (CDR, Charging Data Record); after receiving a request for establishing a traffic offload bearer such as a bearer B2 of the bearer B1 and sending an offline charging request again, the P-GW writes charging information of the traffic offload bearer of the bearer B1 into the same CDR according to the binding relationship between the bearer B1, the traffic offload bearer of the bearer B1 and the charging session S; and hereafter, the P-GW may make statistics on charging information of a service such as the service 1 which is carried on the bearer B1 and on the traffic offload bearer of the bearer B1 and then write the charging information into the CDR, so as to implement charging control.

Because requirement for real-time performance of the offline charging is not high, a charging mechanism of offline associating the CDRs may also be adopted, that is, an association identifier is included in each CDR of the bearer and one or more traffic offload bearers of the bearer, and the association identifier is used to associate CDR files of the traffic offload bearers so as to perform unified charging processing, which includes: writing, by the offline charging system, the charging information of the bearer B1 and the charging information of the service flow into the first charging data record, and the first charging data record being corresponding to the bearer B1; writing, by the offline charging system, the association identifier into the first charging data record, and the association identifier being used to associate the first charging data record and the second charging data record which is corresponding to the traffic offload bearer of the bearer B1; and when receiving the offline charging request for performing charging for the service flow on the traffic offload bearer of the bearer B1, writing charging information of the traffic offload bearer and the association identifier into the second charging data record, which is as shown in FIG. 5-d.

In the embodiment as shown in FIG. 5-d, when the offline charging system receives the offline charging request for performing charging for the service flow (such as the service 1) on the bearer B1, a CDR (such as a CDR1) is opened, and the charging information of the bearer B1 is written into the CDR, and here the CDR1 corresponds to the bearer B1; and when the offline charging system receives the charging formation (which is included in another offline charging request Creq2 sent by the P-GW) of the service flow such as the service 1, the charging information of the service flow is written into the CDR such as the CDR1, where the charging information is included in another offline charging request Creq2 which is sent by the P-GW.

After receiving a response to the offline charging request Creq2, the P-GW starts to make statistics on the charging information of the service flow such as the service 1 and write the charging information into the CDR1; after determining to establish the traffic offload bearer of the bearer B1, the P-GW allocates an association identifier according to the binding relationship between the bearer B1 and the traffic offload bearer of the bearer B1, where, for the generation process of the binding relationship, reference may be made to the relevant description in the foregoing embodiment, and the association identifier is used to associate the CDR1 which is corresponding to the bearer B1 and the CDR2 which is corresponding to the traffic offload bearer of the bearer B1, and the association identifier is sent to the offline charging system through an offline charging request Creq3.

The offline charging system writes the association identifier into the CDR1, and when receiving an offline charging request Creq4 for performing charging for the service flow on the traffic offload bearer of the bearer B1, writes the charging information of the traffic offload bearer and the association identifier into the CDR2.

When receiving a response to the offline charging request Creq4, the P-GW makes statistics on the charging information of the service flow on the bearer B1 and on the charging information of the service flow on the traffic offload bearer of the bearer B1, and writes the charging information into the CDR1 and the CDR2 respectively. Because the CDR1 and the CDR2 are associated with each other through the association identifier, unified charging can be implemented for the service flow on the bearer B1 and the service flow on the traffic offload bearer of the bearer B1.

Referring to FIG. 8, a schematic diagram of a basic logical structure of a flow based charging apparatus is provided in a fourth embodiment of the present invention. For the convenience of description, merely the part that is related to the embodiment of the present invention is shown. The apparatus includes a session initiating module 81, a rule acquiring module 82, and a charging control module 83.

The session initiating module 81 is configured to initiate a charging session S for performing flow based charging on a bearer B1.

The rule acquiring module 82 is configured to acquire, through the charging session S initiated by the session initiating module 81, a policy control and charging rule R2 for performing flow based charging on the bearer B1 and on a traffic offload bearer B2 of the bearer B1.

The charging control module 83 is configured to, when a charging triggering event is detected, interact with a charging system through the charging session S to perform charging control on service flows on the bearer B1 and on the traffic offload bearer B2 of the bearer B1.

The charging control module 83 as shown in FIG. 8 may further include a re-authorization request sending unit 91, a response receiving unit 92 and a flow information sending unit 93. The flow based charging apparatus which is provided in a fifth embodiment of the present invention is shown in FIG. 9.

The re-authorization request sending unit 91 is configured to, when the flow based charging apparatus detects a charging re-authorization triggering event, send a re-authorization request of the charging session S, where the re-authorization request includes traffic that is used on the bearer B1 and charging information on the traffic offload bearer B2 of the bearer B1, for example, one or any random combination of an identifier of the traffic offload bearer of the bearer B1, a packet data identifier of the traffic offload bearer of the bearer B1, rating group information, and a service identifier.

The response receiving unit 92 is configured to receive a response message for responding to the re-authorization request, where the response message includes a quantity of quotas that are reserved for the service flows on the bearer B1 and on the traffic offload bearer B2 of the bearer B1.

The flow information sending unit 93 is configured to make statistics on an amount of service usage on the bearer B1 and on the traffic offload bearer B2 of the bearer B1, and according to the quantity of reserved quotas and the amount of service usage, send information which includes the amount of service usage to the charging system, so that the charging system performs fee deduction according to the amount of service usage.

The flow based charging apparatus as shown in FIG. 8 or FIG. 9 may further include a binding relationship generating module 101. A flow based charging apparatus which is provided in a sixth embodiment of the present invention is shown in FIG. 10. The binding relationship generating module 101 is configured to generate a binding relationship between the bearer B1 and the traffic offload bearer of the bearer B1, and a binding relationship between the bearer B1, the traffic offload bearer of the bearer B1 and the charging session S. The binding relationships between multiple bearers and between multiple bearers and the charging session S are described in the foregoing embodiment, which is not repeatedly described here again.

The rule acquiring module 82 as shown in FIG. 10 may further include a reporting unit 111 and a receiving unit 112. A flow based charging apparatus which is provided in a seventh embodiment of the present invention is shown in FIG. 11.

The reporting unit 111 is configured to report an identifier of the bearer B1 and an identifier of the traffic offload bearer of the bearer B1 which are in the binding relationship that is generated by the binding relationship generating module 101 to a policy and charging enforcement function node.

The receiving unit 112 is configured to receive a policy control and charging rule which is delivered by the policy and charging enforcement function node according to the identifier of the B1 and the identifier of the traffic offload bearer of the bearer B1.

Referring to FIG. 12, a schematic diagram of a basic logical structure of a online charging system is provided in an eighth embodiment of the present invention. For the convenience of description, merely the part that is related to the embodiment of the present invention is shown. The online charging system includes a session responding module 121, a re-authorization request receiving module 122, and a fee deduction executing module 123.

The session responding module 121 is configured to respond to a charging session S to perform credit control on a service flow on the bearer B1, where the charging session S is used to perform flow based charging on the service flow on the bearer B1.

The re-authorization request receiving module 122 is configured to receive a re-authorization request of the charging session S and perform charging control on service flows on the bearer B1 and on a traffic offload bearer B2 of the bearer B1, where the re-authorization request includes traffic that is used on the bearer B1 and charging information on the traffic offload bearer B2 of the bearer B1.

The fee deduction executing module 123 is configured to, according to an amount of service usage on the bearer B1 and on the traffic offload bearer B2 of the bearer B1, perform fee deduction for the service flows and return a response message of the re-authorization request, where the response message includes the quantity of reserved quotas of the service flows on the bearer B1 and on the traffic offload bearer B2 of the bearer B1.

An online charging system as shown in FIG. 12 may further include a credit control submodule 131. The online charging system which is provided in a ninth embodiment of the present invention is shown in FIG. 13. The credit control submodule 131 is configured to receive a re-authorization request of a charging session S and perform unified credit control on the service flows on a bearer B1 and on a traffic offload bearer of the bearer B1.

It should be noted that, because the contents such as information interaction between each module or unit, implementation processes, and technical effects of the foregoing device are based on the same concept as the method embodiments of the present invention, for specific contents, reference can be made to the relevant description in the method embodiments of the present invention, which are not repeatedly described here again.

Persons of ordinary skill in the art may understand that all or a part of the steps of each method in the foregoing embodiments may be accomplished by a program instructing relevant hardware. The program may be stored in a computer readable storage medium. The storage medium may include a read only memory (ROM, Read Only Memory), a random access memory (RAM, Random Access Memory), a magnetic disk, or an optical disk.

In the foregoing content, the method and apparatus for flow based charging and the flow based charging system which are provided in the embodiments of the present invention are introduced in detail. The principle and implementation manners of the present invention are illustrated through specific examples in this application. The description about the foregoing embodiments is merely used to help understand the methods and core ideas of the present invention. Meanwhile, persons of ordinary skill in the art can make modifications to the present invention in the specific implementation manners and application scopes according to the ideas of the present invention. In conclusion, the content of the specification shall not be understood as limiting the scope of the present invention as defined by the following claims.

## Claims

1. A flow based charging method comprising:
initiating a charging session that is used to perform flow based charging on a bearer (S301); and **characterized in that**, when a charging triggering event is detected, interacting with a charging system through the charging session to perform charging control on service flows on the bearer and on a traffic offload bearer of the bearer (S302).

2. The method according to claim 1, wherein the interacting with the charging system through the charging session to perform the charging control on the service flows on the bearer and on the traffic offload bearer of the bearer comprises:
interacting with an online charging system through the charging session to perform unified credit control on the service flows on the bearer and on the traffic offload bearer of the bearer.

3. The method according to claim 1, wherein the interacting with the charging system through the charging session to perform the charging control on the service flows on the bearer and on the traffic offload bearer of the bearer comprises:
interacting with an offline charging system through the charging session to perform the charging control on the service flows on the bearer and on the traffic offload bearer of the bearer.

4. The method according to claim 2, wherein after the initiating the charging session that is used to perform the flow based charging on the bearer, the method comprises:
generating a binding relationship between the bearer and the traffic offload bearer of the bearer and a binding relationship between the bearer, the traffic offload bearer of the bearer and the charging session.

5. The method according to claim 4, wherein the generating the binding relationship between the bearer and the traffic offload bearer of the bearer specifically comprises:
using a bearer identifier to establish the binding relationship between the bearer and the traffic offload bearer of the bearer, or using a bearer identifier and a packet data network connection identifier to establish the binding relationship between the bearer and the traffic offload bearer of the bearer; and
the generating the binding relationship between the bearer, the traffic offload bearer of the bearer and the charging session specifically comprises:
using the bearer identifier and a charging session identifier to establish the binding relationship between the bearer, the traffic offload bearer of the bearer and the charging session, or using the bearer identifier, the packet data network connection identifier and a charging session identifier to establish the binding relationship between the bearer, the traffic offload bearer of the bearer and the charging session.

6. The method according to claim 5, wherein the interacting with the charging system through the charging session to perform the unified credit control on the service flows on the bearer and on the traffic offload bearer of the bearer further comprises: acquiring a policy control and charging rule that is used to perform flow based charging on the bearer and on the traffic offload bearer of the bearer.

7. The method according to claim 6, wherein the acquiring the policy control and charging rule that is used to perform the flow based charging on the bearer and on the traffic offload bearer of the bearer specifically is:
reporting the bearer identifier and an identifier of the traffic offload bearer of the bearer which are in the binding relationship to a policy and charging rules function node; and
receiving a policy control and charging rule which is delivered, according to the bearer identifier and the identifier of the traffic offload bearer of the bearer, by the policy and charging rules function node.

8. The method according to claim 6 or 7, wherein after the acquiring the policy control and charging rule that is used to perform the flow based charging on the bearer and on the traffic offload bearer of the bearer, the method further comprises:
configuring, according to the policy control and charging rule, counters which are used to make statistics on traffic of the service flows on the bearer and on the traffic offload bearer of the bearer.

9. The method according to claim 2, wherein the charging triggering event comprises a charging re-authorization triggering event or a charging termination triggering event;
the charging re-authorization triggering event comprises any one of a new-establishment request of the traffic offload bearer of the bearer, an update request of any one of the bearer and the traffic offload bearers of the bearer, a service data flow request of any one of the bearer and the traffic offload bearers of the bearer, and a termination request of some of the bearer and the traffic offload bearers of the bearer; and
the charging termination triggering event comprises a termination request of a bearer that is terminated at last among the bearer and the traffic offload bearers of the bearer.

10. The method according to claim 9, wherein the interacting with the charging system through the charging session to perform the unified credit control on the service flows on the bearer and on the traffic offload bearer of the bearer comprises:
when the charging re-authorization triggering event is detected, sending a re-authorization request of the charging session, wherein the re-authorization request comprises information of the quantity of reserved quotas that are used on the bearer and charging information on the traffic offload bearer of the bearer; and
receiving a response message of the re-authorization request, wherein the response message comprises the quantity of reserved quotas of the service flows on the bearer and on the traffic offload bearer of the bearer.

11. The method according to claim 10, wherein the charging information on the traffic offload bearer of the bearer comprises one or any random combination of an identifier of the traffic offload bearer of the bearer, a packet data identifier of the traffic offload bearer of the bearer, rating group information and a service identifier.

12. The method according to claim 1, wherein the interacting with a charging system through the charging session to perform charging control on service flows on the bearer and on a traffic offload bearer of the bearer comprises:
writing charging information of a service flow into a first charging data record, wherein the first charging data record corresponds to a bearer;
allocating an association identifier according to a binding relationship between the bearer and a traffic offload bearer of the bearer, wherein the association identifier is used to associate the first charging data record and a second charging data record which is corresponding to the traffic offload bearer; and
making statistics on charging information of the service flow on the bearer and writing the charging information of the service flow on the bearer into the first charging data record, and making statistics on charging information of the service flow on the traffic offload bearer of the bearer and writing the charging information of the service flow on the traffic offload bearer into the second charging data record.

13. The method according to claim 1, wherein the interacting with a charging system through the charging session to perform charging control on service flows on the bearer and on a traffic offload bearer of the bearer comprises:
writing, by an offline charging system, charging information of a bearer and charging information of a service flow into a first charging data record, wherein the first charging data record corresponds to the bearer;
writing, by the offline charging system, an association identifier into the first charging data record, wherein the association identifier is used to associate the first charging data record and a second charging data record which is corresponding to a traffic offload bearer of the bearer; and
when receiving an offline charging request for performing charging for the service flow on the traffic offload bearer of the bearer, writing charging information of the traffic offload bearer of the bearer and the association identifier into the second charging data record.

14. A flow based charging apparatus comprising a session initiating module (81), configured to initiate a charging session for performing flow based charging on a bearer (S301); **characterized in that** it further comprises a charging control module, configured to, when a charging triggering event is detected, interact with a charging system through the charging session to perform charging control on service flows on the bearer and on a traffic offload bearer of the bearer (S302).

15. The apparatus according to claim 14, further comprising:
a binding relationship generating module, configured to generate a binding relationship between the bearer and the traffic offload bearer of the bearer and a binding relationship between the bearer, the traffic offload bearer of the bearer and the charging session.

## Patentansprüche

1. Auf Fluss basierendes Vergebührungsverfahren, umfassend:
Einleiten einer Vergebührungssitzung, die zum Durchführen von auf Fluss basierender Vergebührung an einem Träger verwendet wird (S301); und **dadurch gekennzeichnet, dass**
wenn ein Vergebührungstriggerungsereignis detektiert wird, mittels der Vergebührungssitzung mit einem Vergebührungssystem in Interaktion getreten wird, um Vergebührungssteuerung an Dienstflüssen auf dem Träger und auf einem Verkehrsabladeträger des Trägers durchzuführen (S302).

2. Verfahren nach Anspruch 1, wobei mittels der Vergebührungssitzung mit dem Vergebührungssystem in Interaktion zu treten, um die Vergebührungssteuerung an den Dienstflüssen auf dem Träger und auf dem Verkehrsabladeträger des Trägers durchzuführen, Folgendes umfasst:
mittels der Vergebührungssitzung mit einem Online-Vergebührungssystem in Interaktion treten, um vereinigte Guthabensteuerung an den Dienstflüssen auf dem Träger und auf dem Verkehrsabladeträger des Trägers durchzuführen.

3. Verfahren nach Anspruch 1, wobei mittels der Vergebührungssitzung mit dem Vergebührungssystem in Interaktion zu treten, um die Vergebührungssteuerung an den Dienstflüssen auf dem Träger und auf dem Verkehrsabladeträger des Trägers durchzuführen, Folgendes umfasst:
mittels der Vergebührungssitzung mit einem Offline-Vergebührungssystem in Interaktion treten, um die vereinigte Guthabensteuerung an den Dienstflüssen auf dem Träger und auf dem Verkehrsabladeträger des Trägers durchzuführen.

4. Verfahren nach Anspruch 2, wobei das Verfahren nach dem Einleiten der Vergebührungssitzung, die zum Durchführen der auf Fluss basierenden Vergebührung an dem Träger verwendet wird, Folgendes umfasst:
Erzeugen einer Bindungsbeziehung zwischen dem Träger und dem Verkehrsabladeträger des Trägers und einer Bindungsbeziehung zwischen dem Träger, dem Verkehrsabladeträger des Trägers und der Vergebührungssitzung.

5. Verfahren nach Anspruch 4, wobei das Erzeugen der Bindungsbeziehung zwischen dem Träger und dem Verkehrsabladeträger des Trägers spezifisch Folgendes umfasst:
Verwenden einer Trägerkennung zur Herstellung der Bindungsbeziehung zwischen dem Träger und dem Verkehrsabladeträger des Trägers oder Verwenden einer Trägerkennung und einer Paketdatennetzwerk-Verbindungskennung zur Herstellung der Bindungsbeziehung zwischen dem Träger und dem Verkehrsabladeträger des Trägers; und
das Erzeugen der Bindungsbeziehung zwischen dem Träger, dem Verkehrsabladeträger des Trägers und der Vergebührungssitzung spezifisch Folgendes umfasst:
Verwenden der Trägerkennung und einer Vergebührungssitzungskennung zur Herstellung der Bindungsbeziehung zwischen dem Träger, dem Verkehrsabladeträger des Trägers und der Vergebührungssitzung oder Verwenden der Trägerkennung, der Paketdatennetzwerk-Verbindungskennung und einer Vergebührungssitzungskennung zur Herstellung der Bindungsbeziehung zwischen dem Träger, dem Verkehrsabladeträger des Trägers und der Vergebührungssitzung.

6. Verfahren nach Anspruch 5, wobei mittels der Vergebührungssitzung mit dem Vergebührungssystem in Interaktion zu treten, um die vereinigte Guthabensteuerung an den Dienstflüssen auf dem Träger und auf dem Verkehrsabladeträger des Trägers durchzuführen, ferner Folgendes umfasst: Beschaffen einer Richtliniensteuer- und Vergebührungsregel, mit der auf Fluss basierende Vergebührung an dem Träger und an dem Verkehrsabladeträger des Trägers durchgeführt wird.

7. Verfahren nach Anspruch 6, wobei das Beschaffen der Richtliniensteuer- und Vergebührungsregel, die zum Durchführen der auf Fluss basierenden Vergebührung an dem Träger und an dem Verkehrsabladeträger des Trägers verwendet wird, spezifisch Folgendes umfasst:
Melden der Trägerkennung und einer Kennung des Verkehrsabladeträgers des Trägers, die sich in der Bindungsbeziehung befinden, an einen Richtlinien- und Vergebührungsregelfunktionsknoten; und
Empfangen einer Richtliniensteuer- und Vergebührungsregel, die gemäß der Trägerkennung und der Kennung des Verkehrsabladeträgers des Trägers durch den Richtlinien- und Vergebührungsregelfunktionsknoten abgeliefert wird.

8. Verfahren nach Anspruch 6 oder 7, wobei das Verfahren nach dem Beschaffen der Richtliniensteuer- und Vergebührungsregel, die zum Durchführen der auf Fluss basierenden Vergebührung an dem Träger und an dem Verkehrsabladeträger des Trägers verwendet wird, ferner Folgendes umfasst:
Konfigurieren von Zählern, mit denen Statistiken an Verkehr der Dienstflüsse auf dem Träger und auf dem Verkehrsabladeträger des Trägers erstellt werden, gemäß der Richtliniensteuer- und Vergebührungsregel.

9. Verfahren nach Anspruch 2, wobei das Vergebührungstriggerungsereignis ein Vergebührungsneuautorisierungs-Triggerungsereignis oder ein Vergebührungsabschluss-Triggerungsereignis umfasst;
das Vergebührungsneuautorisierungs-Triggerungsereignis ein beliebiges einer Neuherstellungsanforderung des Verkehrsabladeträgers des Trägers, einer Aktualisierungsanforderung eines beliebigen des Trägers und der Verkehrsabladeträger des Trägers, einer Dienstdatenflussanforderung eines beliebigen des Trägers und der Verkehrsabladeträger des Trägers und einer Abschlussanforderung einiger des Trägers und der Verkehrsabladeträger des Trägers umfasst; und
das Vergebührungsabschluss-Triggerungsereignis eine Abschlussanforderung eines Trägers der unter dem Träger und den Verkehrsabladeträgern des Trägers letztendlich abgeschlossen wird, umfasst.

10. Verfahren nach Anspruch 9, wobei mittels der Vergebührungssitzung mit dem Vergebührungssystem in Interaktion zu treten, um die vereinigte Guthabensteuerung an den Dienstflüssen auf dem Träger und auf dem Verkehrsabladeträger des Trägers durchzuführen, Folgendes umfasst:
Senden einer Neuautorisierungsanforderung der Vergebührungssitzung, wenn das Vergebührungsneuautorisierungs-Triggerungsereignis detektiert wird, wobei die Neuautorisierungsanforderung Informationen der Quantität reservierter Quoten, die auf dem Träger verwendet werden, und Vergebührungsinformationen über den Verkehrsabladeträger des Trägers umfasst; und
Empfangen einer Antwortnachricht der Neuautorisierungsanforderung, wobei die Antwortnachricht die Quantität reservierter Quoten der Dienstflüsse auf dem Träger und auf dem Verkehrsabladeträger des Trägers umfasst.

11. Verfahren nach Anspruch 10, wobei die Vergebührungsinformationen über den Verkehrsabladeträger des Trägers eine oder eine beliebige Zufallskombination von Folgendem umfasst: einer Kennung des Verkehrsabladeträgers des Trägers, einer Paketdatenkennung des Verkehrsabladeträgers des Trägers, Einstufungsgruppeninformationen und einer Dienstkennung.

12. Verfahren nach Anspruch 1, wobei mittels der Vergebührungssitzung mit einem Vergebührungssystem in Interaktion zu treten, um Vergebührungssteuerung an Dienstflüssen auf dem Träger und auf einem Verkehrsabladeträger des Trägers durchzuführen, Folgendes umfasst:
Schreiben von Vergebührungsinformationen eines Dienstflusses in eine erste Vergebührungsdatenaufzeichnung, wobei die erste Vergebührungsdatenaufzeichnung einem Träger entspricht;
Vergeben einer Assoziationskennung gemäß einer Bindungsbeziehung zwischen dem Träger und einem Verkehrsabladeträger des Trägers, wobei die Assoziationskennung zum Assoziieren der ersten Vergebührungsdatenaufzeichnung und einer zweiten Vergebührungsdatenaufzeichnung, die dem Verkehrsabladeträger entspricht, verwendet wird; und
Erstellen von Statistiken über Vergebührungsinformationen des Dienstflusses auf dem Träger und Schreiben der Vergebührungsinformationen des Dienstflusses auf dem Träger in die erste Vergebührungsdatenaufzeichnung und Erstellen von Statistiken über Vergebührungsinformationen des Dienstflusses auf dem Verkehrsabladeträger des Trägers und Schreiben der Vergebührungsinformationen des Dienstflusses auf dem Verkehrsabladeträger in die zweite Vergebührungsdatenaufzeichnung.

13. Verfahren nach Anspruch 1, wobei mittels der Vergebührungssitzung mit einem Vergebührungssystem in Interaktion zu treten, um Vergebührungssteuerung an Dienstflüssen auf dem Träger und auf einem Verkehrsabladeträger des Trägers durchzuführen, Folgendes umfasst:
Schreiben von Vergebührungsinformationen eines Trägers und von Vergebührungsinformationen eines Dienstflusses in eine erste Vergebührungsdatenaufzeichnung durch ein Offline-Vergebührungssystem, wobei die erste Vergebührungsdatenaufzeichnung dem Träger entspricht;
Schreiben einer Assoziationskennung in die erste Vergebührungsdatenaufzeichnung durch das Offline-Vergebührungssystem, wobei die Assoziationskennung zum Assoziieren der ersten Vergebührungsdatenaufzeichnung und einer zweiten Vergebührungsdatenaufzeichnung, die einem Verkehrsabladeträger des Trägers entspricht, verwendet wird; und
Schreiben von Vergebührungsinformationen des Verkehrsabladeträgers des Trägers und der Assoziationskennung in die zweite Vergebührungsdatenaufzeichnung, wenn eine Offline-Vergebührungsanforderung des Durchführens von Vergebührung für den Dienstfluss auf dem Verkehrsabladeträger des Trägers empfangen wird.

14. Vorrichtung zur auf Fluss basierenden Vergebührung, die ein Sitzungseinleitungsmodul (81) umfasst, das dafür ausgelegt ist, eine Vergebührungssitzung zum Durchführen von auf Fluss basierender Vergebührung an einem Träger einzuleiten (S301); **dadurch gekennzeichnet, dass** sie ferner Folgendes umfasst:
ein Vergebührungssteuermodul, das dafür ausgelegt ist, wenn ein Vergebührungstriggerungsereignis detektiert wird, mittels der Vergebührungssitzung mit einem Vergebührungssystem in Interaktion zu treten, um Vergebührungssteuerung an Dienstflüssen auf dem Träger und auf einem Verkehrsabladeträger des Trägers durchzuführen (S302).

15. Vorrichtung nach Anspruch 14, die ferner Folgendes umfasst:
ein Bindungsbeziehungs-Erzeugungsmodul, das dafür ausgelegt ist, eine Bindungsbeziehung zwischen dem Träger und dem Verkehrsabladeträger des Trägers und eine Bindungsbeziehung zwischen dem Träger, dem Verkehrsabladeträger des Trägers und der Vergebührungssitzung zu erzeugen.

## Revendications

1. Procédé de facturation en fonction du flux, consistant :
à déclencher une session de facturation qui est utilisée pour effectuer une facturation en fonction du flux sur un support (S301) ; et **caractérisé en ce qu'**il comprend,
lorsqu'un événement de déclenchement de facturation est détecté, d'interagir avec un système de facturation par le biais de la session de facturation pour réaliser un contrôle de facturation sur des flux de service sur le support et sur un support de délestage de trafic du support (S302).

2. Procédé selon la revendication 1, dans lequel l'interaction avec le système de facturation par le biais de la session de facturation pour réaliser le contrôle de facturation sur les flux de service sur le support et sur le support de délestage de trafic du support consiste à :
interagir avec un système de facturation en ligne par le biais de la session de facturation pour réaliser un contrôle de crédit unifié sur les flux de service sur le support et sur le support de délestage de trafic du support.

3. Procédé selon la revendication 1, dans lequel l'interaction avec le système de facturation par le biais de la session de facturation pour réaliser le contrôle de facturation sur les flux de service sur le support et sur le support de délestage de trafic du support consiste à :
interagir avec un système de facturation hors ligne par le biais de la session de facturation pour réaliser le contrôle de facturation sur les flux de service sur le support et sur le support de délestage de trafic du support.

4. Procédé selon la revendication 2, dans lequel, après le déclenchement de la session de facturation qui est utilisée pour réaliser la facturation en fonction du flux sur le support, le procédé consiste à :
générer une relation de liaison entre le support et le support de délestage de trafic du support et une relation de liaison entre le support, le support de délestage de trafic du support et la session de facturation.

5. Procédé selon la revendication 4, dans lequel la génération de la relation de liaison entre le support et le support de délestage de trafic du support consiste spécifiquement à :
utiliser un identifiant de support pour établir la relation de liaison entre le support et le support de délestage de trafic du support ou utiliser un identifiant de support et un identifiant de connexion de réseau de données par paquets pour établir la relation de liaison entre le support et le support de délestage de trafic du support ; et
la génération de la relation de liaison entre le support, le support de délestage de trafic du support et la session de facturation consiste spécialement à :
utiliser l'identifiant de support et un identifiant de session de facturation pour établir la relation de liaison entre le support, le support de délestage de trafic du support et la session de facturation ou utiliser l'identifiant de support, l'identifiant de connexion de réseau de données par paquets et un identifiant de session de facturation pour établir la relation de liaison entre le support, le support de délestage de trafic du support et la session de facturation.

6. Procédé selon la revendication 5, dans lequel l'interaction avec le système de facturation par le biais de la session de facturation pour réaliser le contrôle de crédit unifié sur les flux de service sur le support et sur le support de délestage de trafic du support consiste en outre à : acquérir une règle de facturation et de commande de politique qui est utilisée pour effectuer une facturation en fonction du flux sur le support et sur le support de délestage de trafic du support.

7. Procédé selon la revendication 6, dans lequel l'acquisition de la règle de facturation et de commande de politique qui est utilisée pour effectuer la facturation en fonction du flux sur le support et sur le support de délestage de trafic du support consiste spécifiquement à :
rapporter l'identifiant de support et un identifiant du support de délestage de trafic du support qui se trouvent dans la relation de liaison à un noeud de fonction de règles de facturation et de politique ; et
recevoir une règle de facturation et de commande de politique qui est délivrée, en fonction de l'identifiant de support et de l'identifiant du support de délestage de trafic du support, par le noeud de fonction de règles de facturation et de politique.

8. Procédé selon la revendication 6 ou 7, dans lequel, après l'acquisition de la règle de facturation et de commande de politique qui est utilisée pour effectuer la facturation en fonction du flux sur le support et sur le support de délestage de trafic du support, le procédé consiste en outre à :
configurer, en fonction de la règle de facturation et de commande de politique, des compteurs qui sont utilisés pour réaliser des statistiques sur le trafic des flux de service sur le support et sur le support de délestage de trafic du support.

9. Procédé selon la revendication 2, dans lequel l'événement de déclenchement de facturation comprend un événement de déclenchement de réautorisation de facturation ou un événement de déclenchement de fin de facturation ;
l'événement de déclenchement de réautorisation de facturation comprend l'une quelconque d'une demande de nouvel établissement du support de délestage de trafic du support, d'une demande de mise à jour de l'un quelconque du support et des supports de délestage de trafic du support, d'une demande de flux de données de service de l'un quelconque du support et des supports de délestage de trafic du support et d'une demande de fin d'une partie du support et des supports de délestage de trafic du support ; et
l'événement de déclenchement de fin de facturation comprend une demande de fin d'un support qui est terminé enfin parmi le support et les supports de délestage de trafic du support.

10. Procédé selon la revendication 9, dans lequel l'interaction avec le système de facturation par le biais de la session de facturation pour réaliser le contrôle de crédit unifié sur les flux de service sur le support et sur le support de délestage de trafic du support consiste :
lorsque l'événement de déclenchement de réautorisation de facturation est détecté, à envoyer une demande de réautorisation de la session de facturation, dans lequel la demande de réautorisation comporte des informations de la quantité de quotas réservés qui sont utilisés sur le support, ainsi que des informations de facturation sur le support de délestage de trafic du support ; et
recevoir un message de réponse de la demande de réautorisation, dans lequel le message de réponse comprend la quantité de quotas réservés des flux de service sur le support et sur le support de délestage de trafic du support.

11. Procédé selon la revendication 10, dans lequel les informations de facturation concernant le support de délestage de trafic du support comporte une ou n'importe quelle combinaison aléatoire d'un identifiant du support de délestage de trafic du support, d'un identifiant de données par paquets du support de délestage de trafic du support, d'informations de groupe de tarification et d'un identifiant de service.

12. Procédé selon la revendication 1, dans lequel l'interaction avec un système de facturation par le biais de la session de facturation pour réaliser un contrôle de facturation sur des flux de service sur le support et sur un support de délestage de trafic du support consiste à :
écrire des informations de facturation d'un flux de service dans un premier enregistrement de données de facturation, dans lequel le premier enregistrement de données de facturation correspond à un support ;
attribuer un identifiant d'association en fonction d'une relation de liaison entre le support et un support de délestage de trafic du support, dans lequel l'identifiant d'association est utilisé pour associer le premier enregistrement de données de facturation et un second enregistrement de données de facturation qui correspond au support de délestage de trafic ; et
réaliser des statistiques sur des informations de facturation du flux de service sur le support et écrire les informations de facturation du flux de service sur le support dans le premier enregistrement de données de facturation et réaliser des statistiques sur des informations de facturation du flux de service sur le support de délestage de trafic du support et écrire les informations de facturation du flux de service sur le support de délestage de trafic dans le second enregistrement de données de facturation.

13. Procédé selon la revendication 1, dans lequel l'interaction avec un système de facturation par le biais de la session de facturation pour réaliser un contrôle de facturation sur des flux de service sur le support et sur un support de délestage de trafic du support consiste :
à écrire, au moyen d'un système de facturation hors ligne, des informations de facturation d'un support et des informations de facturation d'un flux de service dans un premier enregistrement de données de facturation, dans lequel le premier enregistrement de données de facturation correspond au support ;
à écrire, au moyen du système de facturation hors ligne, un identifiant d'association dans le premier enregistrement de données de facturation, dans lequel l'identifiant d'association est utilisé pour associer le premier enregistrement de données de facturation et un second enregistrement de données de facturation qui correspond au support de délestage de trafic du support ; et
lors de la réception d'une demande de facturation hors ligne pour effectuer une facturation pour le flux de service sur le support de délestage de trafic du support, à écrire des informations de facturation du support de délestage de trafic du support et l'identifiant d'association dans le second enregistrement de données de facturation.

14. Appareil de facturation en fonction du flux comprenant un module de déclenchement de session (81), configuré pour déclencher une session de facturation pour effectuer une facturation en fonction du flux sur un support (S301) ; **caractérisé en ce qu'**il comprend en outre :
un module de commande de facturation, configuré : lorsqu'un événement de déclenchement de facturation est détecté, pour interagir avec un système de facturation par le biais de la session de facturation pour réaliser un contrôle de facturation sur des flux de service sur le support et sur un support de délestage de trafic du support (S302).

15. Appareil selon la revendication 14, comprenant en outre :
un module de génération de relation de liaison, configuré pour générer une relation de liaison entre le support et le support de délestage de trafic du support et une relation de liaison entre le support, le support de délestage de trafic du support et la session de facturation.
